# EUROPÄISCHE PATENTANMELDUNG

(11) **EP 3 716 290 A1**
(43) Veröffentlichungstag der Anmeldung: **30.09.2020**
(21) Anmeldenummer: 19165875.6
(22) Anmeldetag: 28.03.2019
(51) Int. Cl.: H01B 3/40, C08L 63/00, H01B 3/04, H02K 3/30

(54) **FORMULIERUNG FÜR EIN ISOLATIONSSYSTEM, ISOLATIONSSYSTEM DARAUS UND ELEKTRISCHE MASCHINE MIT ISOLATIONSSYSTEM**

(71) Anmelder: Siemens Aktiengesellschaft, 80333 München (DE)
(72) Erfinder: Huber, Jürgen, 91058 Erlangen (DE); Schirm, Dieter, 96149 Breitengüßbach (DE); Übler, Matthias, 92289 Ursensollen (DE); Brockschmidt, Mario, 45131 Essen (DE); Mühlberg, Regina, 06128 Halle (DE); Olbrich, Irene, 13581 Berlin (DE); Rossow, Torsten, 13581 Berlin (DE)

(57) **Zusammenfassung**

Die Erfindung betrifft eine neuartige Formulierung, insbesondere eine, die zur Herstellung eines Isolationssystems mittels Anhydrid-freier Härtung einsetzbar ist. Außerdem betrifft die Erfindung die Herstellung eines Isolationssystems über die "Vacuum Pressure Impregnation - VPI -Prozesstechnik mit Tauchbad für die Tränkung glimmerbandisolierter Statoren elektrischer Maschinen wie Motoren und Generatoren. Durch die Erfindung konnte erstmals beim Anhydrid-freien Imprägnierharz im VPI-Prozess bei geringem Gehalt an Zinkverbindung und/oder Supersäuresalz als Beschleuniger im festen Isolierstoff und gegebenenfalls Supersäurensalz im flüssigen Imprägnierharz eine ausreichende Gelzeit für die Verarbeitung im VPI-Prozess erreicht werden.

## Beschreibung

Die Erfindung betrifft eine neuartige Formulierung, insbesondere eine, die zur Herstellung eines Isolationssystems mittels Anhydrid-freier Härtung einsetzbar ist. Außerdem betrifft die Erfindung die Herstellung eines Isolationssystems über die "Vacuum Pressure Impregnation - VPI -Prozesstechnik mit Tauchbad für die Tränkung glimmerbandisolierter Statoren elektrischer Maschinen wie Motoren und Generatoren.

Die Isolationssysteme von elektrischen Maschinen wie Generatoren und Motoren werden bevorzugt über den so genannten VPI-Prozess mittels Tauchbad hergestellt. Dabei wird ein mit einem festen Isolierstoff umwickelter Leiter in ein mit einem Imprägnierharz gefülltes Tauchbad eingebracht, dort bei erhöhter Temperatur und unter Druck behandelt, so dass das flüssige Imprägnierharz in die Wicklungen eindringen kann und schließlich aus dem Tauchbad wieder herausgehoben und zur Harzverfestigung noch bei stark erhöhter Temperatur gelagert. Als Basisharze werden dabei bevorzugt Epoxidharzformulierungen eingesetzt. Diese werden meist als Zweikomponentenansätze ("2K") verarbeitet, wobei ein Reaktivharz oder eine Reaktivharzmischung auf Bisphenol-A- oder -F- Diglycidyletherbasis und/oder Novolak-Basis mit Anhydriden und gegebenenfalls zusätzlichen Additiven im Tauchbad vorliegen und in der Wicklung im festen Isolierstoff ein "Beschleuniger" deponiert ist, der bei Kontakt mit dem flüssigen Imprägnierharz dieses zur Polymerisation anregt.

Seit Dezember 2012 ist bekannt, dass Anhydride und/oder Säureanhydride, insbesondere Phthalsäureanhydride, wie das Hexahydrophthalsäureanhydrid, Methylhexahydrophthalsäureanhydrid, sowie alle Strukturisomere davon wegen bekannt gewordener Toxizität in der EU nicht mehr langfristig erlaubt sein werden. Die industrielle Verwendung dieser Stoffe ist daher ohne Zukunft und es besteht der Bedarf, hier Ersatz zu schaffen.

Es wurde erkannt, dass Anhydrid-freie, also REACH-konforme Imprägnierharze auf Epoxidharzbasis, die unter Homopolymerisation härten, im Gegensatz zu einem per Polyaddition vernetzenden Epoxidharz-/Phthalsäureanhydrid-Gemisch den gravierenden Nachteil aufweisen, dass bandbeschleunigerferne und/oder bandbeschleunigerfreie Areale und Bereiche der Wicklungen während der thermischen Härtung nicht oder nur nach sehr langer Härteperiode zum Formstoff aushärten.

Dies begründet sich in der Beschleunigerkonzentrationsabhängigkeit der Gelier- und damit auch der Aushärtekinetik und/oder Geschwindigkeit. In Falten, Taschen, Verwerfungen und/oder Zwickeln, in die kein oder nur sehr wenig Bandbeschleuniger aus den Glimmerbändern während der Flutung ausgewaschen wird, ist eben diese härtungsinitiierende Spezies, ein anionisch oder ein kationisch wirkendes Agens, nur in derart geringem Ausmaß präsent, dass in gewünschter Zeit von drei bis neun Stunden keine Gelierung bei Imprägniertemperatur, wie beispielsweise bei 70°C, stattfindet. Deshalb ist bei der Homopolymerisation von Epoxidfunktionalitäten zum Aufbau eines Hochpolymeren, also des fertig gehärteten Formstoffes durch Polyveretherung bei den beispielsweise eingesetzten Glycidyletherepoxiden der Beschleunigergehalt direkt proportional der Homopolymerisation. Bei diesen Imprägnierharzen ist aber nicht nur der Grad der Polymerisation, der Homopolymerisation, sondern insbesondere auch die Gelierreichweite signifikant geringer als bei den bekannten Anhydrid-haltigen Imprägnierharzen.

Bei einer Polyaddition ist das anders, weil beispielsweise in einem Epoxidharz-/Phthalsäureanhydrid-Gemisch ein sehr geringer Gehalt an Bandbeschleuniger ausreicht, der die Härtung initiiert, die dann von alleine auch in sehr bandfernen Arealen eine Gelierung bewirkt, insbesondere weil bei der Polyaddition zwischen Oxiran- und Anhydrid-Funktionalitäten die Härtung sich selbst ohne Kettenabbruch aufrechterhält und stetig zum gewünschten Hochpolymer führt. Durch das Weglassen des Anhydrids, also bei REACH und/oder SVHC-konformer Ausstaffierung, wird der Reaktionsmechanismus der Polymerisation oder Härtung von der Polyaddition hin zur Homopolymerisation des Epoxidharzes und Ausbildung von Etherverbrückungen verschoben.

Das anhydridfreie Imprägnierharz ist sodann - vorteilhaft - kein reaktives System mehr, was in Anbetracht der Lagerstabilität, z.B. bei dauerhafter 70°C - Auslagerung sehr wünschenswert ist, aber dadurch eben nicht mehr befähigt, durch verhältnismäßig geringe Bandbeschleunigergehalte auch in den glimmerbandfernen Bereichen zu gelieren, geschweige denn zum Formkörper auszuhärten. Dies insbesondere deshalb, weil bei Homopolymerisation ein direkt-proportionaler Zusammenhang zwischen anionischem oder kationischem Beschleunigergehalt und resultierender Gelierzeit, also auch End-Glasübergangstemperatur, besteht. Praktisch äußert sich dieses Problem in nicht gelierten und/oder nicht ausgehärteten Bereichen der elektrischen Isolation, was im schlimmsten Fall zu einem Auslaufen des Tränkharzes nach der Vakuum- Druck-Imprägnier-Phase, vor allem während ruhender Aushärtung, führt und luftgefüllte Bereiche in der Isolation hinterlässt.

Dies führt schlussendlich zu nicht tolerablen elektrischen Verlustfaktoren, hoher Teilentladungsresistenz und im schlechtesten Falle zu raschen, elektrischen Durchschlägen, damit zu unbrauchbaren, elektrischen Maschinen und damit zu hohem Produktionsausschuss.

Derzeit werden vergleichsweise hohe Gehalte an Glimmerband-Beschleuniger, insbesondere bei der anionisch initiierten Homopolymerisation, eingesetzt. Diese betragen bis zu 5 Gew.-% bezogen auf das Epoxidharz. Wird die Menge an Glimmerband-Beschleunigerherabgesetzt, resultieren nur noch Formstoffe mit Glasübergangstemperaturen von 50°C bis 70°C. Gerade in glimmerbandfernen Bereichen, dort wo aufgrund der geringen Bandbeschleunigerauswaschung im Flutungs-Prozess während der Tauchimprägnierung des VPI-Verfahrens, und/oder diffusionsbedingt nur noch Beschleunigergehalte im Zehntelbereich oder geringer vorhanden sind, findet kein Gelieren mehr statt, sondern das Epoxidharz "verzäht" nur noch.

Sobald der Stator in diesem Zustand aus der Vakuum-Druck-Imprägnier- Tauch-Wanne gehoben wird und ruhend bei Umgebungsdruck auf Aushärtetemperatur von 140°C bis 160°C gebracht wird, verdünnt sich das nicht gelierte Harz derart, dass es teilweise aus den Falten und Taschen fließen kann oder flüssig dort verbleibt. Elektrisch sind diese Fehlstellen einer aus einem derartigen "Formstoff-Gießharz-Gemisch" hergestellten Isolation äußerst kritisch, weil die Fehlstellen Luft oder unvernetztes Harz aufweisen und damit zu hohen dielektrischen Verlusten führen. Deshalb können derartige Fehlstellen zu einer signifikanten Reduzierung der Lebensdauer von elektrischen Maschinen führen.

Aus diesem Grund schwenkt der Markt derzeit auf Imprägnierharze um, die auf den Beschleuniger oder Katalysator im Glimmerband nicht mehr angewiesen sind, weil im Imprägnierharz selbst ein Beschleuniger vorliegt. Dieser wird auch als "Badbeschleuniger" oder "Badkatalysator" bezeichnet. Beispielsweise handelt es sich dabei auf kationisch-initiierende Verbindungen, mit beispielsweise latent-eingestellten Substanzen, die erst ab einer bestimmten Temperatur in Aktiva zerfallen, die katalytisch, also beschleunigend auf das Vernetzen des Gießharzes wirken.

Nachteilig ist daran, dass diese Substanzen keine wirklichen "Schalttemperaturen" haben, sondern lediglich ein "Onset" der Vernetzungsreaktion als Funktion der Heizrampe angegeben werden kann. Eine Schalttemperatur und/oder die maximale Zerfallsgeschwindigkeit bei so genannter "Peak-Temperatur" liegt bevorzugt in der Nähe der tatsächlichen Aushärtetemperatur des imprägnierten Objekts, um einen möglichst hohen Grad an Vernetzung und damit eine möglichst hohe Glasübergangstemperatur zu realisieren. Oft ist die Aushärtetemperatur im Bereich von 140°C bis 160°C angesiedelt. Da die Zerfallsgeschwindigkeit der im Imprägnierbad dispergierten Badbeschleuniger aber auch bei 70°C, einer üblichen Imprägniertemperatur, nicht null ist, findet schon dort ein teilweiser Zerfall in beschleunigende Moleküle statt.

Die Reaktionsenthalpie beispielsweise kationisch-aushärtender Epoxidharze rangiert nicht selten im Bereich von 600 - 700 Kilojoule pro Kilogramm, was bei ungewollter Überhitzung z.B. an Hotspots oder im adiabatischen Überhitzungsszenario zu Autokatalyse mit anschließender Branderscheinung führen kann, besonders bei großen Harzvolumina - wie für Tauch-Wannen im VPI-Prozess - im Tonnenbereich, die schlecht rasch abgekühlt werden können, wenn diese Selbstüberhitzung festgestellt wird. Um diesen Katastrophenfall zu verhindern, wird eine Objekttemperatur von maximal 40°C bis 50°C und eine Imprägnierharz-Temperatur von 23°C bis 40°C vorgeschrieben, um weit genug von der Onset-Temperatur des Badkatalysatorzerfalls entfernt zu sein.

Das Designproblem aller Badkatalysatoren ist demnach konsequenterweise, dass nach dem Ganztränken der Statoren nur geringe, idealerweise keine Reaktivität in Bezug auf das Gelieren der bandbeschleunigerfernen Bereiche, Taschen und/oder Falten der Isolation bei Verwendung eines zusätzlichen Glimmerbandbeschleunigers bei Imprägniertemperatur herrscht und somit bei ruhender Aushärtung ein Auslaufen aus diesen Taschen und Falten und Verwerfungen stattfinden kann, wenn das Imprägnier-Objekt im Aushärteofen von niedriger Imprägniertemperatur auf 140°C bis 160°C langsam erwärmt wird, ehe der Badkatalysator seine Onset-Temperatur erreicht und für die Vernetzung der bandfernen Bereiche sorgt.

Durch einen Wechsel auf rollierende Aushärtung, also ein stetiges Rotieren des vorimprägnierten, heißen Objekts wird ein Auslaufen des dünnflüssigen Harzes beim Aufheizen bis zur Onset-Temperatur weitgehend vermieden, allerdings ist dafür die Apparatur aufwändig - weil ein Tauchbad kann dafür nicht eingesetzt werden und für rotations-asymmetrische Objekte ist diese Technik überhaupt ungeeignet.

Aufgabe der vorliegenden Erfindung ist es daher, einen festen Isolierstoff, beispielsweise für eine Wickelbandisolierung eines Stators einer elektrischen Maschine, zu schaffen, die gewährleistet, dass auch in Taschen, Falten und Verwerfungen des festen Isolierstoffes das Imprägnierharz im Imprägnier-Tauchbad soweit haftet oder geliert, dass die Bildung von Luftlöchern und/oder flüssigen Harzbereichen beim Tauchbadimprägnieren mittels VPI von Anhydrid-freien Systemen soweit wie möglich vermieden wird. Zudem ist es Aufgabe der vorliegenden Erfindung ein flüssiges und Anhydrid-freies Imprägnierharz für das Tauchbad eines VPI-Prozesses zur Verfügung zu stellen, das mit dem Bandbeschleuniger, der im festen Isolierstoff deponiert ist, unter den Bedingungen des VPI-Prozesses soweit geliert, dass das Imprägnierharz aus den Taschen, Verwerfungen und/oder Falten der Wickelbandisolierung weder beim Herausnehmen aus dem Tauchbad noch bei der nachfolgenden Härtung bei erhöhter Temperatur herausläuft.

Diese Aufgabe wird durch den Gegenstand der vorliegenden Erfindung, wie er in den Ansprüchen und der Beschreibung offenbart ist, gelöst.

Demnach ist Lösung der Aufgabe und Gegenstand der vorliegenden Erfindung eine Formulierung für ein Isolationssystem, die geeignet ist für die Verarbeitung mittels eines VPI-Prozesses und nachfolgender Härtung bei erhöhter Temperatur, einen festen Isolierstoff und ein flüssiges Imprägnierharz umfassend, beide unter normalen Bedingungen lagerstabil vorliegend,
wobei der feste Isolierstoff
einen Barriere-Werkstoff in Form von Partikeln und einen Bandkleber, der die Partikel verbindet, sowie eine Zinkverbindung, die ein Zinksalz und/oder eine komplexe Zinkverbindung mit zumindest einem Anion als Liganden umfasst und
das flüssige Imprägnierharz
Anhydrid-frei ist,
ein Harz oder eine Harzmischung umfasst, die zur Homopolymerisation, insbesondere durch Vorliegen von Oxiran-Funktionalitäten, geeignet ist, und
gegebenenfalls Additive umfasst.

Außerdem ist Gegenstand der vorliegenden Erfindung ein Isolationssystem, einen festen Isolierstoff und eine Harzkomponente umfassend, wobei die Harzkomponente durch Homopolymerisation gehärtet ist und im Harz eine Zinkhaltige Komponente vorliegt. Schließlich ist Gegenstand der vorliegenden Erfindung eine elektrische Maschine mit einer Isolation, die einen festen Isolierstoff und ein Harz umfasst, wobei in der Isolation eine Zink-haltige Komponente vorliegt.

Allgemeine Erkenntnis der vorliegenden Erfindung ist es, dass durch Zugabe einer hochaktiven Gelierhilfe, insbesondere einer Zinkverbindung, einer komplexierten Zinkmetallorganischen Verbindung und/oder eines Zinksalzes und bevorzugt eines Zinksalzes einer Supersäure, es möglich ist, die Homopolymerisation gängiger Imprägnierharze oder Imprägniermittel - wie der Epoxidharze auf Diglycidyletherepoxid-Basis und/oder der auf Novolak-Basis - auch in Bandbeschleuniger-fernen Bereichen und/oder in Taschen, Falten oder Verwerfungen der Wickelbandisolierung mittels eines im Tauchbad durchgeführten VPI-Prozesses erfolgreich durchzuführen und zu stabilen, durchgehärteten Formstoffen für ein elektrisches Isolationssystem für eine elektrische Maschine zu kommen.

Die oben festgestellten Nachteile des Standes der Technik werden durch den Einsatz von Zink-Verbindungen, insbesondere Zinksalzen und besonders bevorzugt Zink-Supersäuresalzen in und/oder an dem festen Isolierstoff überwunden und die neuen Anhydrid-freien Techniken zur VPI-Imprägnierung und Isolierung können damit auch weiterhin mittels Tauchbäder ohne die Rotationsapparaturen durchgeführt werden.

Gegenstand der vorliegenden Erfindung ist demnach die Verwendung einer Zinkverbindung als Beschleuniger für die Homopolymerisation eines Imprägnierharzes im VPI-Prozess, wobei die Zinkverbindung entweder in situ während des VPI-Prozesses erzeugt wird oder im festen Isolierstoff vorliegt und wobei die Zinkverbindung geeignet ist, die Homopolymerisation eines Epoxidharzes im Temperaturbereich von 70°C bis 100°C aktiv anzustoßen. Die Zinkverbindung, die entweder in situ während des VPI-Prozesses entsteht oder die im festen Isolierstoff vorliegt ist bevorzugt ein Zinksalz einer Supersäure.

Als "Supersäure" wird eine Säure bezeichnet, wenn ihr Säurekonstantewert "pks-Wert" kleiner 0, insbesondere kleiner -3, ist. Supersäuren können mineralisch und/oder organisch sein. Von den geeigneten Supersäuren gemäß dem Verständnis der Erfindung hat sich die Trifluoromethylsulfonsäure als besonders geeignet erwiesen. Die Metallsalze der Trifluoromethylsulfonsäure werden Triflate genannt und sind geeignete Vertreter der Verbindungsklasse der Supersäurensalze.

Nicht einschränkende Beispiele für Supersäuren im Rahmen des oben definierten Begriffs sind:
*Anorganisch, mineralisch:*
   - Fluorsulfonsäure (HSO₃F)
   - Hexafluoro-Antimonsäure (HSbF₆)
   - Tetrafluoroborsäure (HBF₄)
   - Hexafluorophosphorsäure (HPF₆)
   - Trifluoromethylsulfonsäure (HSO₃CF₃)
*Organisch:*
   - Pentacyanocyclopentadien (HC₅(CN)₅)
   - Teilweise oder ganz fluorierte Derivate des Pentaphenylcyclopentadiens
   - Penta-trifluoromethyl-pentadiens und/oder analoger Derviate
   - Teilweise oder ganz fluorierte Derivate der Tetraphenylborsäure und/oder deren Cyanoderivate
   - Teilweise oder ganz fluorierte Derivate der Arylsulfonsäuren und/oder deren Cyanoderivate
   - Teilweise oder ganz fluorierte Derivate der Arylphosphonsäuren und/oder deren Cyanoderivate
   - Anionen der Carborane wie beispielsweise [C₂B₁₀H₁₀]²⁻ oder [C₁B₁₁H₁₀]⁻

Die Trifluoromethylsulfonsäure -HSO₃CF₃- und die Hexafluoro-Antimonsäure - HSbF₆- sind davon besonders geeignete Vertreter.

Diese Supersäuren bilden Salze und/oder Komplexe mit Zink, wie z.B. Zinktrifluoromethansulfonat und/oder Zinkhexafluoroantimonat, die geeignet sind, allein, in Kombination mit anderen Verbindungen und/oder insbesondere in Lösung, als klarer Lack auf dem festen Isolierstoff, wie beispielsweise dem Wickelband, appliziert zu werden.

Diese Supersäuren bilden auch Salze mit Kationen, wie den Alkalikationen, die im flüssigen Imprägnierharz ohne Einschränkung dessen Lagerstabilität vorliegen können. Dieses liegen gemäß der Erfindung nur optional vor und wirken erst beim Zusammentreffen mit der Zink-Verbindung während des VPI-Prozesses, indem sie in-situ den Beschleuniger, respektive die Gelierhilfe, respektive den Katalysator für die Homopolymerisation bilden.

Diese Alkalisupersäuren-Salze, die im flüssigen Imprägnierharz relativ lager-stabil - siehe dazu Tabelle 1 unten - vorliegen, initiieren während des VPI-Prozesses beim Zusammentreffen mit der im festen Isolierstoff vorliegenden Zinkverbindung in dem Anhydrid-freien flüssigen Imprägniermittel eine Homopolymerisation, die auch in glimmerbandfernen Bereichen, insbesondere in Taschen, Falten und/oder Verwerfungen des gewickelten festen Isolierstoffes, eine Gelierung und folgend eine komplette Aushärtung des Imprägnierharzes bei erhöhter Temperatur.

Beim Vorliegen der Supersäuresalze im flüssigen Imprägniermittel ist es bevorzugt, dass die Zinkverbindung im festen Isolierstoff ein Salz oder eine Komplexverbindung ist, die sich im flüssigen Imprägnierharz leicht separiert, also in der Harzlösung freie Zink-Kationen freisetzt, die dann zusammen mit dem aus der Alkali-Verbindung freigesetzten Salz der Supersäure in- situ als Beschleuniger für die Homopolymerisation dienen. Deshalb werden in dem Fall schwach komplexierende Anionen der Zinkverbindung im festen Isolierstoff bevorzugt.

Eine Zinkverbindung mit einem nicht- oder nur schwach koordinierenden Anion wirkt in einer Epoxidharzabmischung, wie sie beispielsweise in Form einer Glycidyletherepoxidharz- und/oder Epoxynovolak- Abmischung mit einem Supersäurensalz eines - beispielsweise Alkalimetalls - als flüssiges Imprägnierharz bei den hier in Rede stehenden VPI-Prozessen eingesetzt wird, bei Temperaturen von ca. 70°C bis 100°C als effektive hochaktive Gelierhilfe mit einer für Falten und Verwerfungen ausreichenden Gelierreichweite in das Harz und/oder für Zwischenlagenbereiche des festen Isolierstoffes.

Als fester Isolierstoff wird bevorzugt ein so genanntes "Glimmerband" eingesetzt. Ein solches Wickelband umfasst beispielsweise einen Träger, wie ein Gewebe oder ein Gelege aus Verstärkungsfasern, beispielsweise Aramid-, Keramik-, oder Glasfasern, auf dem Partikel eines Barriere-Werkstoffes, eben beispielsweise Glimmerplättchen, angeordnet und mit einem geeigneten Bandkleber verklebt sind. Alternativ kann der feste Isolierstoff nur durch die Verbindung von Barriere-Werkstoff-Partikel, also beispielsweise Glimmerplättchen, gefertigt sein. Sowohl die Glimmerplättchen als auch die gesamte Anordnung hat Poren, in die Bandbeschleuniger, also eine im Imprägnierharz katalytisch wirkende Substanz, eingebracht, insbesondere deponiert, wird. Dieser Bandbeschleuniger darf natürlich keine Reaktivität gegenüber dem eingesetzten Bandkleber haben, da sonst die Lagerstabilität des Bandes unzureichend wäre.

Die Zinkverbindung wird bevorzugt als Lack und/oder Beschichtung auf den festen Isolierstoff aufgetragen. Dabei ist es insbesondere vorteilhaft, wenn der feste Isolierstoff einen Träger aufweist, dass der Lack dann auf der dem Träger entgegengesetzten Seite aufgetragen wird. Dadurch kann die Zinkverbindung leichter im VPI-Prozess freigesetzt werden.

Die Zinkverbindung liegt in der Formulierung in einer Menge von kleiner/gleich 3 Gew%, insbesondere kleiner/gleich 2 Gew% und besonders bevorzugt von kleiner/gleich 1 Gew% bezogen auf die Imprägnierharz-Masse, vor.

Neu ist gemäß eines Ausführungsbeispiels der Erfindung, dass eine Zinkverbindung, beispielsweise ein komplexiertes Zinn und/oder ein Zinnsalz in einem geeigneten Lösungsmittel gelöst auf dem fertigen Wickelband - beispielsweise durch Besprühen, Bedrucken, Bepinseln, Eintauchen - so appliziert werden kann, so dass ein Lager-stabiles Wickelband resultiert.

Beim Einsatz des so behandelten und mit Zinkverbindung versetzten Wickelbandes zur Wickelbandisolierung einer elektrischen Maschine und nachfolgender Harzimprägnierung im VPI-Prozess, reagiert dann die Zinkverbindung entweder direkt mit dem Anhydrid-freien Imprägnierharz und/oder mit einer weiteren, lagerstabil in dem Imprägnierharz vorliegenden, Supersäure oder deren Derivate, so dass die Homopolymerisation des Imprägnierharzes im Tauchbad für ausreichendes Gelieren und für vollständige Durchhärtung im folgenden Aushärteprozess bei erhöhter Temperatur ausreicht.

Im flüssigen Imprägnierharz können - wiederum vorteilhafterweise - Salze wie z.B. Natriumhexafluoroantimonat NaSbF₆ und/oder Kaliumhexafluoroantimonat KSbF₆, eingesetzt werden. Nach einer vorteilhaften Ausführungsform liegt das Zinksalz der Supersäure in einer Epoxidharz-löslichen Form vor.

Nach einer vorteilhaften Ausführungsform der Erfindung liegt ein Zinksalz in Form eines einwertigen, bevorzugt mehrwertigen Supersäuresalzes vor.

Nach einer vorteilhaften Ausführungsform wird das Zinksalz als klarer, epoxidharzhaltiger Lack auf dem festen Isolierstoff, also insbesondere einem Wickelband, aufgetragen.

Als Lösungsmittel für den Lack können organische Lösungsmittel wie, Alkohole, wie Methanol, Ethanol, Ester, insbesondere Carbonsäureester von Essigsäure, Ether, insbesondere Diethylether, Ketone, wie Aceton, Methylethylketon - MEK -, aber auch hochsiedende Lösungsmittel wie das 1-Methoxy-2-propylacetat - PGMEA -, eingesetzt werden.

Als Zinksalze können verschiedenste Zink-Salze mit schwachen Anionen im festen Isolierstoff vorgelegt werden, insbesondere beispielsweise folgende Anionen: Tetrafluoroborat, Trifluoromethansulfonat, Perchlorat, Tetrakis (3,5-bis(trifluoromethyl)phenyl)borat, Hexachloroantimonat, und andere, dem Fachmann als schwach kooridinierende Liganden der Komplexchemie, bekannte Anionen.

Insbesondere geeignet für die Lagerung im festen Isolierstoff sind einige Zinkkomplexverbindungen, wie - gegebenenfalls - wasserfreies Zinktriflat - Zinktrifluoromethansulfonat und/ oder andere anorganisch-organische Zinksalze, sowie andere Salze und insbesondere die Salze von Supersäuren. Diese haben sich insbesondere als hochaktive, einwertige, bevorzugt mehrwertige, epoxidharzlösliche Supersäuresalze bewährt. Z.B. das hexahydratisierte Zinksalz der Perchlorsäure.

Die Zinksalze können auch in Form von doppelt-komplexierten Salzen beispielsweise als Zn(ClO₄)₂(acac)₂ wobei "acac" für "Acetylacetonat" steht, oder Zn(SCN)₂(acac)₂ oder ähnlich aufgebaute Komplex-Verbindungen, vorliegen.

Nach einer vorteilhaften Ausführungsform liegt zusätzlich zu dem im festen Isolierstoff enthaltenen Zinksalz und/oder der Zinkkomplexverbindung im flüssigen Imprägnierbad noch eine Komplexverbindung mit einem Hexafluoroantimonat vor, beispielsweise ein Alkali-Hexafluoroantimonat NaSbF₆ und/oder KSbF₆.

Diese Verbindungen zeigen - in geringen Mengen von unter einem Gew% - kaum oder nur wenig Reaktivität im flüssigen Imprägniermittel, wie Versuche gezeigt haben. Siehe Tabelle 1, Prozentangaben in Gew%.

**Tab. 1: Badanreicherung mit NaSbF₆ / KSbF₆ in Epoxidharz: Erscheinungsbild nach 10h/160°C**

| | |
|---|---|
| 0.02% NaSbF₆: nicht geliert | 0.02% KSbF₆: nicht geliert |
| 0.10% NaSbF₆: geliert | 0.10% KSbF₆: nicht geliert |
| 0.25% NaSbF₆: geliert | 0.25% KSbF₆: nahezu geliert |
| 0.50% NaSbF₆: geliert/gummiartig | 0.50% KSbF₆: geliert |

Die Lagerstabilität bezüglich einer Viskositätsverdopplung einer 0.25%igen Natriumhexafluoroantimonatlösung in Epoxidharz beträgt ca. 73 Tage bei durchgehender Umluftofenlagerung bei 70°C. Dies belegt die Messung von a) der Startviskosität von 42.73 mPas und b) der Viskosität nach 1752 Stunden von 80.98 mPas, bei Messgeometrie CP4°/40mm, also 73 Tage bis zur Viskositätsverdopplung.

Prinzipiell ist damit eine Trennung in quasi-unreaktive Bestandteile zum einen im festen Isolierstoff, beispielsweise Wickelband und flüssigen Imprägnierharz, wie beispielsweise wie beispielsweise das Natriumtrifluoromethansulfonat im flüssigen Bestandteil, dem Imprägnierharz, und eine beispielsweise auch organisch komplexierte metallorganische Komplexverbindung mit Zink im Glimmerband möglich.

Bei Zusammentreffen des flüssigen Imprägniermittels mit dem festen Isolierstoff im VPI-Prozess reagiert dann die Mischung aus einem Zinksalz mit schwach koordiniertem Anion und Hexafluoroantimonat mit schwach koordinierendem Kation wie Zinkhexafluoroantimonat Zn(SbF₆)₂.

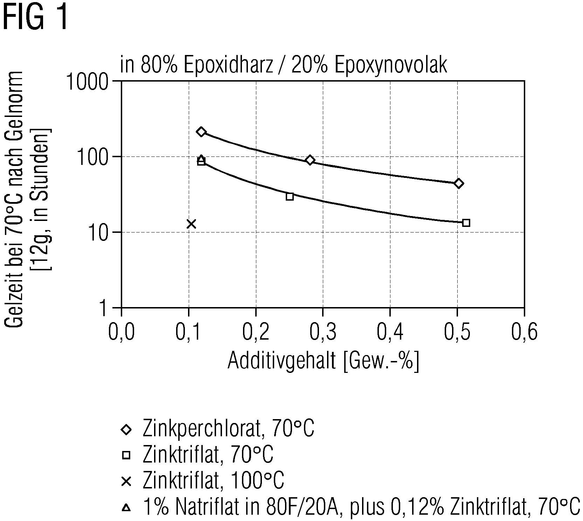

Figur 1 zeigt eine Graphik bei der die Gelzeit bei 70°C in Stunden gegen den Gehalt - als "Additivgehalt" bezeichnet - von Zinkperchlorat, Zinktriflat, und einer Mischung aus Natriumtriflat in einer für das flüssige Imprägnierharz eines VPI-Prozesses typischen Mischung von 80% Epoxidharz und 20% Epoxynovolak mit Zinktriflat - wie es vom festen Isolierstoff im VPI-Prozess stammen könnte - aufgetragen ist. Zu erkennen ist, dass die Gelzeit mit einem steigenden Additivgehalt bis zu 0,5 Gew% sinkt.

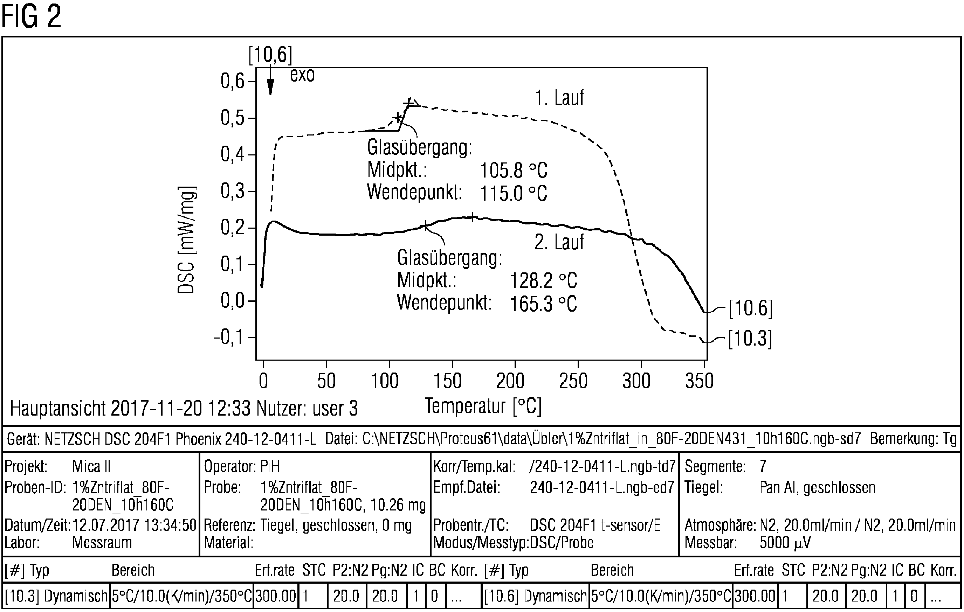

Figur 2 zeigt die Graphik einer Messung der Glasübergangstemperatur eines durch Homopolymerisation gehärteten Harzes aus 1 Gew% Zinktriflat in einem Imprägnierharz aus 80 Gew% Epoxidharz und 20 Gew% Epoxynovolak. Die Aushärtung erfolgte für 10 Stunden bei 160°C.

Aus den Figuren 1 und 2 ergibt sich, dass Zinktriflat - Zinktrifluoromethansulfonat - bis zu einem Gewichtsprozent einem Epoxidharz oder einem Epoxidharz-/Epoxynovolakgemisch beigemengt werden kann und eine klare Mischung resultiert, die bei 70°C gelieren kann - siehe Figur 1 - und beim Aushärten während 10 Stunden bei 140°C bis 160°C einen starren Festkörper mit brauchbarem Glasübergangsbereich ergibt.

Das Zinktriflat ist mit einer Gelierzeit von ca. 85 Stunden bei 70°C und ca. 0,1 Gew% Anteil in Glycidyletherepoxidharz, wie in Figuren 1 und 2 gezeigt, aktiv.

Nach einer weiteren beispielhaften Ausführungsform werden Hexafluoroantimon-Anionen - SbF₆⁻ - mit Zinkkationen kombiniert. Dadurch erhält man ein in organischen Lösungsmitteln lösliches Zinkhexafluoroantimonat, dass bei 70°C in Konzentrationsbereichen von um die 0,02 Gew% in deutlich weniger als einer Stunde ein typisches Imprägnierharz wie das Glycidyletherharz, geliert.

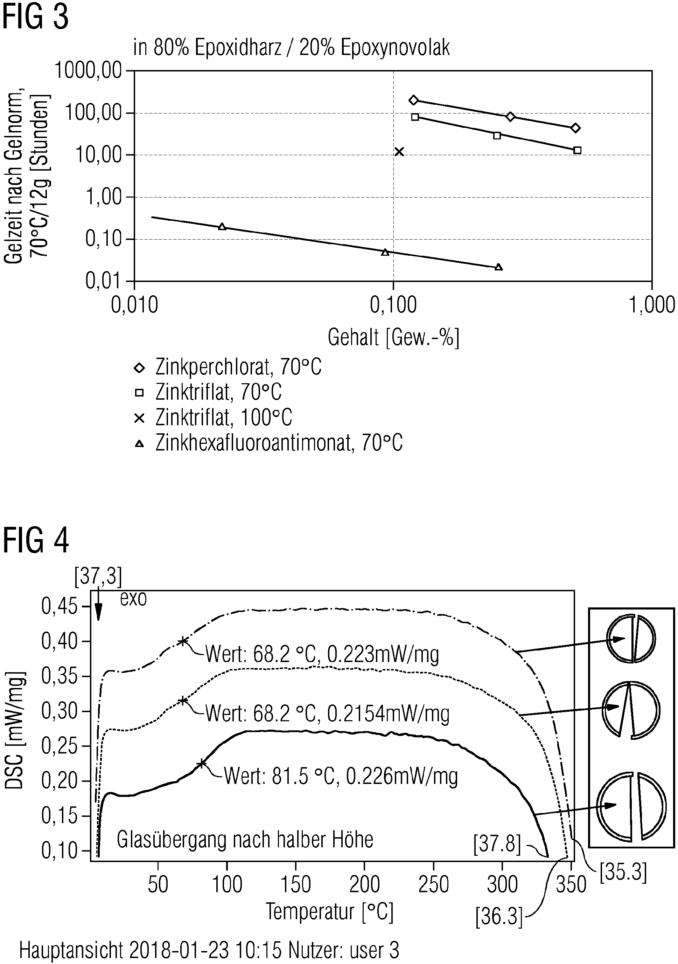

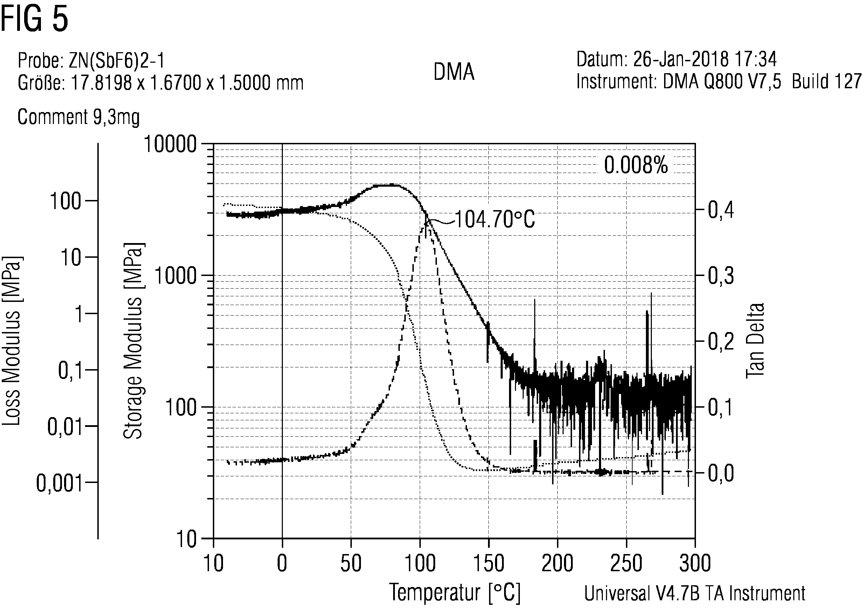

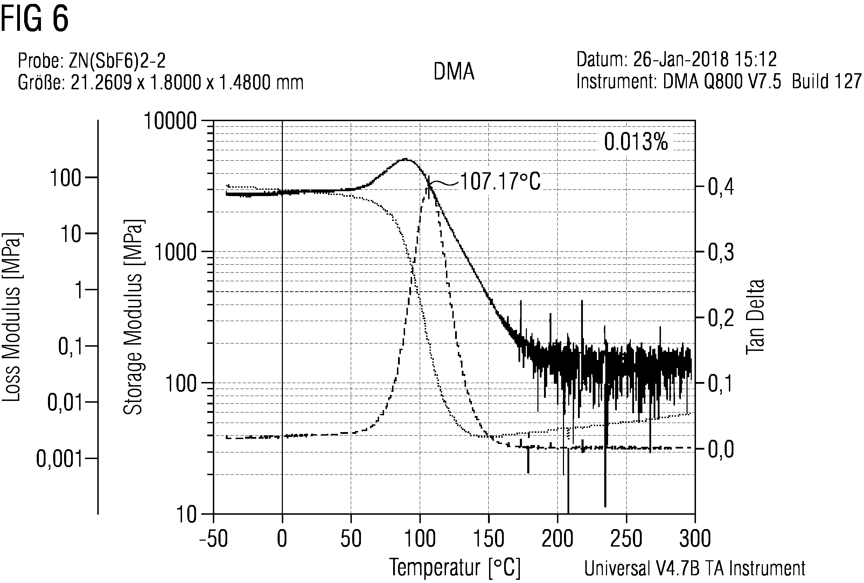

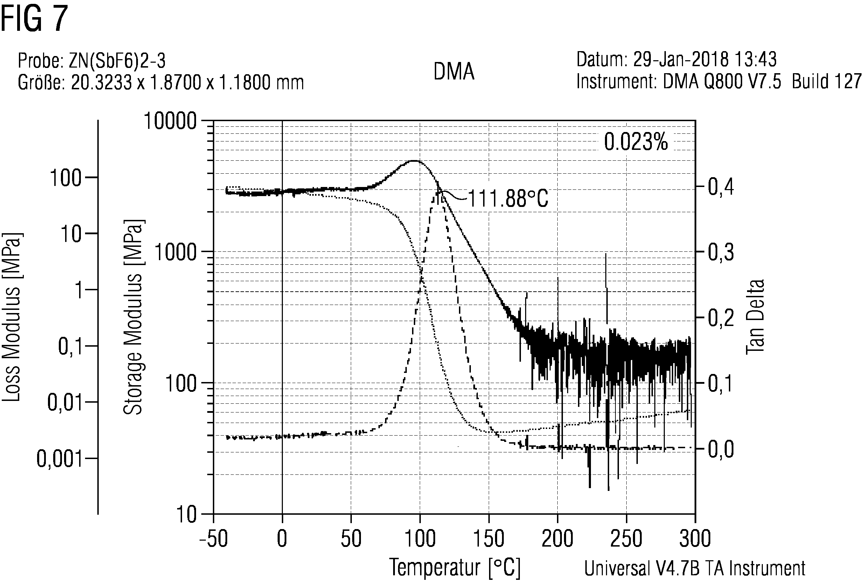

In Figur 3 ist dazu eine Graphik gezeigt, bei der die Gelzeit bei 70°C in Stunden gegen den Gehalt - als "Additivgehalt" bezeichnet - von Zinkperchlorat, Zinktriflat und Zinkhexafluoroantimonat aufgetragen ist. Zu erkennen ist, dass völlig überraschend und unerwartet die Gelzeit des Zinkhexafluoroantimonats im Glycidyletherharz bereits bei einem Gehalt von 0,02 Gew% deutlich weniger als eine Stunde beträgt und bei anschließender Aushärtung während 10 Stunden bei 160°C starre, klare Formkörper mit für Isolationen von elektrischen Maschinen brauchbaren Glasübergängen ergibt, wie in Figuren 4 bis 7 gezeigt.

Figur 4 zeigt die Glasübergänge per DSC.

Die Figuren 5,6 und 7 zeigen die Glasübergänge von mit Zinkhexafluoroantimonat in Lösung gehärteten Imprägnierharzen über eine Messung per DMTA.

Zur Evaluierung einer "Gelierfernwirkung" in purem Epoxidharz wurde Zinkhexafluoroantimonat als ca. 7 bis 10%ige Lösung in Reagenzgläser getropft und ohne Agitation mit unterschiedlichen Massen und damit Harzhöhen überschichtet. Diese Anordnungen wurden jeweils erst bei 70°C und dann bei 160°C gehalten. Dann wurde die nicht-gelierte Harzmasse rückgewogen und die Gelierfronthöhe in Bezug auf das ursprüngliche Einfüllniveau bestimmt.

**Tabelle 2 zeigt Geliertests an reinem Epoxidharz mit ca. 7 bis 10%igem Zinkhexafluoroantimonat in organischem Lösungsmittel.**

| |
|---|
| Nº1: 20mg Zn(SbF₆)₂-Lsg; gefüllt auf 20.0012g (0.010% Zn); Auslauf: 9.7314g (49%); Gelierhöhe 3,5cm von 7cm |
| Nº2: 16mg Zn(SbF₆)₂-Lsg; gefüllt auf 10.6886g (0.015% Zn); Auslauf: 0g (0%); Gelierhöhe 5.5cm von 5.5cm |
| Nº3: 18mg Zn(SbF₆)₂-Lsg; gefüllt auf 19.7923g (0.009% Zn); Auslauf: 4.6820g (24%); Gelierhöhe 8cm von 10.5cm |
| Nº4: 16mg Zn(SbF₆)₂-Lsg; gefüllt auf 28.4913g (0.006% Zn); Auslauf: 13.3033g (47%); Gelierhöhe 8cm von 15.5cm |
| Nº5: 21mg Zn(SbF₆)₂-Lsg; gefüllt auf 22.8666g (0.009% Zn); Auslauf: 16.4212g (72%); Gelierhöhe 3cm von 12cm |

Tabelle 3 zeigt weitere Versuche zur Gelierreichweite durch Überschichten dreier Reagenzgläser unterschiedlicher Füllhöhe mit einem Imprägnierharz aus 80 Gew% Epoxidharz und 20 Gew% Epoxynovolak auf eine 7%- bis 8%-ige Zinkhexafluoroantimonat-Lösung, die erst bei 70°C und dann bei 100°C gehalten wurde.

**Tabelle 3:**

| **Einwaagen:** | |
|---|---|
| Rggl. 1, links: 15.9 mg Lösung, aufgefüllt bis 10.6886g (0.15% Lösung ≅ 0.011% Zn(SbF₆)₂ im Rggl) | |
| Rggl. 2, Mitte: 18.1 mg Lösung, aufgefüllt bis 19.7923g (0.09% Lösung ≅ 0.007% Zn(SbF₆)₂ im Rggl) | |
| Rggl. 3 rechts: 16.2 mg Lösung, aufgefüllt bis 28.4913g (0.06% Lösung ≅ 0.004% Zn(SbF₆)₂ im Rggl) | |
| | |
| Keine Durchmischung, nur Einfüllen des Harzes, anschließende Auslagerung | |
| | |

| **Auslaufmasse nach 3h 70°C plus 20h 100°C:** | |
|---|---|
| Rggl. 1, links: 0g (0%), | Gelierhöhe ca. 5.5 cm, Distanz zum urspr. Einfüllspiegel: 0 cm |
| Rggl. 2, Mitte: -4.6820g (44%), | Gelierhöhe ca. 8.0 cm, Distanz zum urspr. Einfüllspiegel: 2.5cm |
| Rggl. 3, rechts: -13.3033g (47%), | Gelierhöhe ca. 7.8 cm, Distanz zum urspr. Einfüllspiegel: 7.7cm |

Die Auslaufmasse gibt den noch ungelierten Teil des flüssigen Imprägnierharzes an, die Differenz zur Einwaage zeigt dann den gelierten Teil.

In weiteren Versuchen konnte auch gezeigt, werden, dass das Zinkhexafluoroantimonat gut mit festem Isolierstoff, wie beispielsweise Glimmerpapier, kompatibel ist. Dazu wurde ein handelsübliches Glimmerpapier mit Zinkhexafluoroantimonat beschichtet, getrocknet und anschließend mit einer Epoxidharz/Epoxynovolak-Mischung beschichtet.

Die Ergebnisse sind in Tabelle 4 zusammengefasst:

**Tabelle 4**

| *Tab. 3: Imprägnierversuche auf bandheschleunigerfreiem Glimmerpapier, 8cm Durchmesser (=0.005 m²)* | | | | | | | | |
|---|---|---|---|---|---|---|---|---|
| Probe | Glimmerpapier [g] | 7-10% Zn(SbF₆)₂ in MEK 191 | MEK-Zusatz [g] | Lackauftrag [g] | Epoxidharz [g] | Zn(SbF₆)₂ in Epoxidharz [Gew.-%] | Zn(SbF₆)₂ Flächenauftrag [g/m²] | Erscheinung |
| Nº1 | 0.9544 | 0.2 | 0.8 | 1.0 | 2.01 | 0.99 | 4.0 | fest |
| Nº2 | 0.9395 | 0.4 | 0.4 | 0.8 | 2.01 | 1.95 | 8.0 | fest |
| Nº3 | 0.9461 | 0.6 | 0.0 | 0.6 | 2.04 | 2.86 | 11.9 | fest |
| Nº4 | 0.9625 | 0.2 | 0.0 | 0.2 | 2.08 | 0.95 | 4.0 | fest |

Das beschriebene Zinkhexafluoroantimonat ist ein Material, das auf Anhydrid-freies Gylcidyletherepoxidharz im Rahmen des VPI-Prozesses in etwa so reaktiv regiert, wie aminischer Beschleuniger auf ein früher übliches, Anhydrid-enthaltendes Epoxidharz-Methylhexahydrophthalsäureanhydrid-Gemisch, nämlich in Konzentrationsbereichen von unter 0,1 Gew%. Das Zinkhexafluoroantimonat kann in fester oder flüssiger Form appliziert werden und als in-situ erzeugte oder bereits als Zinkverbindung vorliegende Komponente.

Insbesondere vorteilhaft ist gemäß der Erfindung auch eine Ausführungsform, bei der die Zinkverbindung mit anderen Beschleunigern und/oder Additiven als Lack auf den festen Isolierstoff, wie das Glimmerband, aufgetragen wird.

Durch die Erfindung konnte erstmals beim Anhydrid-freien Imprägnierharz im VPI-Prozess bei geringem Gehalt an Zinkverbindung und/oder Supersäuresalz als Beschleuniger im festen Isolierstoff und gegebenenfalls Supersäurensalz im flüssigen Imprägnierharz eine ausreichende Gelzeit für die Verarbeitung im VPI-Prozess erreicht werden.

## Patentansprüche

1. Formulierung für ein Isolationssystem, die geeignet ist für die Verarbeitung mittels eines VPI-Prozesses und nachfolgender Härtung bei erhöhter Temperatur, einen festen Isolierstoff und ein flüssiges Imprägnierharz umfassend, beide unter normalen Bedingungen lagerstabil vorliegend,
wobei der feste Isolierstoff folgendes umfasst:
einen Barriere-Werkstoff in Form von Partikeln und einen Bandkleber, der die Partikel verbindet, sowie eine Zinkverbindung, die ein Zinksalz und/oder eine Zink-Komplexverbindung mit zumindest einem Anion als Liganden,
und
das flüssige Imprägnierharz
Anhydrid-frei ist,
ein Harz oder eine Harzmischung umfasst, die zur Homopolymerisation, insbesondere durch Vorliegen von Oxiran-Funktionalitäten, geeignet ist, und
gegebenenfalls Additive umfasst.

2. Formulierung nach Anspruch 1, bei der das Anion der Zinkverbindung ein schwach komplexierendes Anion ist.

3. Formulierung nach einem der vorhergehenden Ansprüche 1 oder 2, bei der das Anion ein Anion einer Supersäure ist.

4. Formulierung nach einem der vorhergehenden Ansprüche, bei der im festen Isolierstoff die Zinkverbindung in einer Menge von weniger als 3 Gew%, bezogen auf die zu gelierende und/oder härtende Masse an flüssigem Imprägnierharz, vorliegt.

5. Formulierung nach einem der vorhergehenden Ansprüche, bei der im festen Isolierstoff eine Zink-Komplexverbindung mit schwach koordinierenden Liganden vorliegt.

6. Formulierung nach einem der vorhergehenden Ansprüche, bei der die Zinkverbindung als Feststoff im festen Isolierstoff vorliegt.

7. Formulierung nach einem der vorhergehenden Ansprüche, bei der die Zinkverbindung in Lösung im festen Isolierstoff vorliegt.

8. Formulierung nach einem der vorhergehenden Ansprüche, bei der die Zinkverbindung das Salz einer Supersäure ist.

9. Formulierung nach einem der vorhergehenden Ansprüche, bei der im flüssigen Imprägnierharz ein Salz einer Supersäure vorliegt.

10. Formulierung nach einem der vorhergehenden Ansprüche, bei der im flüssigen Imprägnierharz ein Alkalisalz einer Supersäure vorliegt.

11. Formulierung nach einem der vorhergehenden Ansprüche, bei der die Zinkverbindung auf dem festen Isolierstoff als Lack aufgebracht ist.

12. Formulierung nach einem der vorhergehenden Ansprüche, bei dem der feste Isolierstoff noch einen Träger umfasst.

13. Formulierung nach einem der vorhergehenden Ansprüche, bei der der feste Isolierstoff mit einem Lack, der die Zinkverbindung umfasst, auf der, dem Träger entgegengesetzten, Seite beschichtet ist.

14. Isolationssystem, das durch Verarbeitung einer Formulierung nach einem der Ansprüche 1 bis 13 in einem VPI Prozess und anschließender Härtung herstellbar ist.

15. Elektrische Maschine mit einem Isolationssystem nach Anspruch 14.
